Europäisches Patentamt

European Patent Office

Office européen des brevets

(19)

(11) Numéro de publication : **0 402 262 B1**

(12) **FASCICULE DE BREVET EUROPEEN**

(45) Date de publication du fascicule du brevet :
**12.10.94 Bulletin 94/41**

(51) Int. Cl.⁵ : **H02H 7/00, H02H 9/06**

(21) Numéro de dépôt : **90401555.9**

(22) Date de dépôt : **07.06.90**

(54) **Dispositif de protection contre les claquages haute tension.**

(30) Priorité : **09.06.89 FR 8907668**

(43) Date de publication de la demande :
**12.12.90 Bulletin 90/50**

(45) Mention de la délivrance du brevet :
**12.10.94 Bulletin 94/41**

(84) Etats contractants désignés :
**BE CH DE GB IT LI**

(56) Documents cités :
**FR-A- 2 277 648**
**US-A- 3 749 979**

(72) Inventeur : **Fumelli, Michel**
**11, rue E. Signoret**
**F-13100 Aix en Provence (FR)**
Inventeur : **Jequier, François**
**15, La Rochette des Spels**
**F-04100 Manosque (FR)**
Inventeur : **Pamela, Jérome**
**122 rue Frédéric Mistral**
**F-84120 Pertuis (FR)**

(74) Mandataire : **Mongrédien, André et al**
**c/o BREVATOME**
**25, rue de Ponthieu**
**F-75008 Paris (FR)**

(73) Titulaire : **COMMISSARIAT A L'ENERGIE ATOMIQUE**
**31/33, rue de la Fédération**
**F-75015 Paris Cédex 15 (FR)**

# Description

L'invention concerne un dispositif de protection contre les claquages accidentels dans les circuits des installations électriques fonctionnant en courant continu et comportant des électrodes portées à haute tension. De nombreuses applications sont possibles, aussi bien dans le domaine de la recherche que celui de l'industrie, par exemple dans les générateurs haute fréquence (klystrons, gyrotrons), les accélérateurs de particules, les installations de chauffage par induction électromagnétique et les canons à électrons.

Les circuits des installations électriques constitués d'un générateur et d'une charge comportant des électrodes portées à haute tension peuvent être l'objet de claquages accidentels qui mettent en court-circuit le générateur utilisé. Dans ce cas, un très fort courant de court-circuit amorce un arc électrique entre les électrodes, alimenté par la vaporisation de ces électrodes. Afin d'éviter de graves dommages sur ces électrodes ou dans les autres parties constituantes du circuit de l'installation électrique, il est indispensable d'interrompre cet arc dans un temps très court. Dans les installations en régime continu, c'est-à-dire dans la plupart des cas, il est également nécessaire de rétablir le fonctionnement normal du circuit dans un délai aussi bref que possible après l'extinction de l'arc électrique, pour que l'installation électrique conserve sa fiabilité.

Actuellement, on assure une telle protection par l'utilisation d'éléments actifs, tels que des thyristors, des court-circuiteurs rapides, ou des tétrodes. Ces éléments sont installés dans le circuit de l'installation électrique et permettent d'interrompre le passage du courant en un temps très court qui peut être inférieur à la milliseconde. Ils permettent également le rétablissement du courant après extinction du claquage, et ceci en quelques millisecondes. Ces dispositifs de protection ont deux défauts essentiels : ils sont très coûteux, et nécessitent une électronique de commande délicate à mettre en oeuvre.

Le but de l'invention est de remédier à ces inconvénients au moyen d'un dispositif ayant une conception et un fonctionnement différents des dispositifs de l'art antérieur, mais permettant d'atteindre les mêmes objectifs.

D'autre part, le document de brevet FR-A-2 277 648 décrit un dispositif d'usinage par électro-érosion et un générateur électrique pour alimenter la charge, il comprend :
- une première branche comportant le générateur et une résistance connectés en série ;
- une deuxième branche comportant la charge et une diode, cette deuxième branche étant connectée en parallèle à la première branche,
- une troisième branche comprenant une inductance et une capacité montées en série, et connectée aux deux points de connexion.

Conformément à l'invention, il est proposé un dispositif de protection contre les claquages accidentels dans le circuit d'une installation électrique fonctionnant en courant continu, et comportant une charge dont les électrodes sont portées à une haute tension, et un générateur électrique pour alimenter la charge, caractérisé en ce qu'il comprend :
- une première branche comportant le générateur et une résistance connectés en série ;
- une deuxième branche comportant la charge et un composant placé en série avec la charge et ne laissant passer le courant électrique que dans un sens, cette deuxième branche étant connectée en parallèle à la première branche par deux points de connexion ; et
- une troisième branche constituée d'une inductance et d'une capacité montées en série, et connectée aux deux points de connexion ;
  le dispositif étant agencé de telle sorte que, en fonctionnement normal de l'installation électrique, la capacité est chargée positivement et, lorsqu'un claquage accidentel amorce un arc entre les électrodces de la charge, la capacité, dans une première phase, se décharge dans ledit arc électrique et se charge négativement jusqu'à ce que la tension entre lesdits points de connexion devienne négative, ce qui met fin à l'arc électrique entre les électrodes de la charge ensuite dans une deuxième phase, la capacité chargée négativement se décharge dans la résistance de la première branche jusqu'à ce que la tension entre lesdits points de connexion redevienne positive, et enfin dans une troisième phase le générateur charge positivement la capacité pour rétablir le fonctionnement normal de l'installation électrique.

Dans une variante de réalisation, la résistance de la première branche est la résistance interne du générateur électrique.

Le composant ne laissant passer le courant électrique que dans un sens est de préférence une diode.

L'invention et ses caractéristiques seront mieux comprises à la lecture de la description d'un mode de réalisation de l'invention donné à titre d'exemple non limitatif, et qui est annexée des figures représentant respectivement :
- figure 1, le dispositif de protection selon l'invention ;
- figure 2, une courbe représentative de la charge de la capacité en fonction du temps ;
- figure 3, une courbe représentative du courant dans la résistance en fonction du temps ;
- figure 4, une courbe représentative du courant dans la charge, en fonction du temps ; et
- figure 5, une courbe représentative de la tension entre les deux points de connexion A et B.

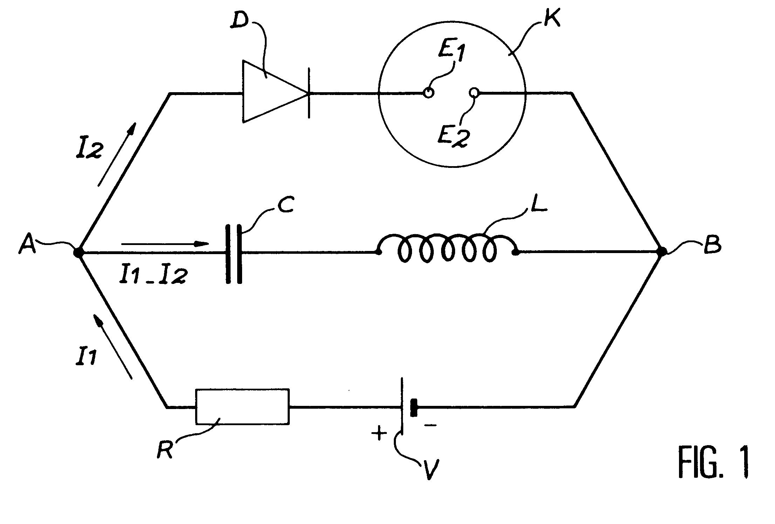

Sur la figure 1, le dispositif de protection selon l'invention est intégré à une installation électrique comportant une charge K alimentée en haute tension par un générateur V. Il est basé sur le principe des décharges oscillatoires d'un circuit RLC couplé à l'utilisation d'une diode.

Une première partie du dispositif comporte une première branche comprenant le générateur V et une résistance R placée en série à la borne positive du générateur V. On peut remarquer que la résistance R peut être connectée indifféremment à la borne positive ou négative du générateur V. Les extrémités de cette première branche sont connectées aux extrémités A, B, d'une deuxième branche comportant la charge K et un composant D placé en série avec ladite charge K et ne laissant passer le courant que dans le sens requis pour l'utilisation normale de la charge K. Le composant D est de préférence une diode. Dans la réalisation décrite sur la figure 1, c'est la cathode de la diode D qui est connectée à une première borne de la charge K ; mais, la charge K peut être connectée indifféremment en aval ou en amont du composant D.

Une troisième branche du dispositif de protection selon l'invention est montée en parallèle avec les deux premières branches, c'est-à-dire avec la charge K et la diode D, et donc également en parallèle avec le générateur V complété de la résistance R. Cette troisième branche comprend une inductance L montée en série avec une capacité C, et ses extrémités sont connectées, d'une part au premier point de connexion A, situé entre la résistance R et l'anode de la diode D dans la réalisation de la figure 1, et d'autre part au deuxième point de connexion B reliant, dans la présente réalisation, la deuxième borne de la charge K et la borne négative du générateur V. On peut remarquer que l'inductance L et la capacité C peuvent être montées dans un ordre indifférent.

Dans cette installation électrique, les éventuels court-circuits peuvent apparaître entre les deux électrodes $E_1$ et $E_2$ de la charge K. Etant donné les hautes tensions mises en jeu et la constitution des deux électrodes $E_1$ et $E_2$, un arc électrique peut être entretenu par la vaporisation des électrodes.

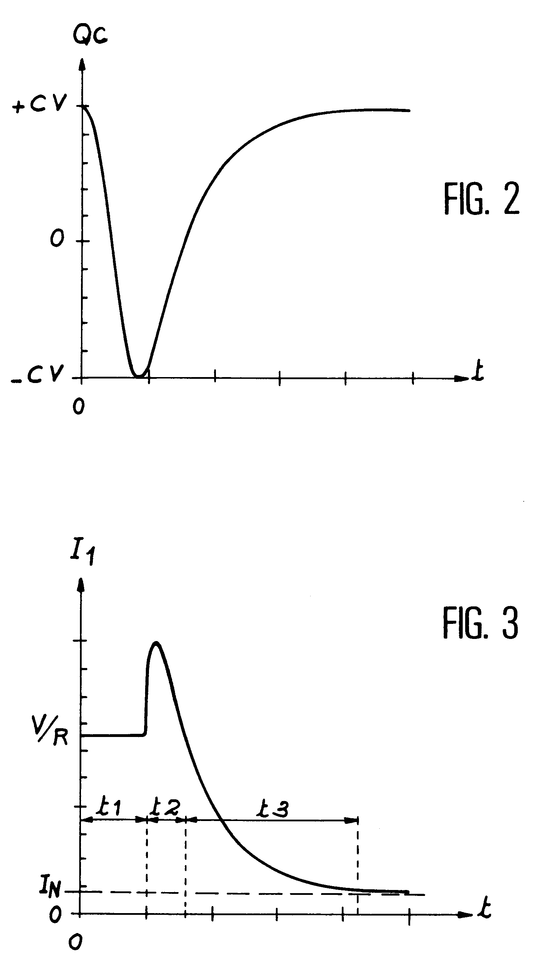

Le fonctionnement du dispositif de protection selon l'invention est maintenant expliqué en référence simultanément aux figures 2, 3, 4 et 5.

L'apparition d'un arc électrique dans l'installation électrique décrite, sa disparition et le retour en condition normale de fonctionnement sont donc décomposés en trois phases représentées respectivement par les trois durées $t_1$, $t_2$ et $t_3$.

Pendant la première phase de durée $t_1$, un arc électrique apparaît entre les deux électrodes $E_1$ et $E_2$. C'est le phénomène de claquage. La charge K est alors équivalente à un court-circuit dont l'impédance est négligeable.

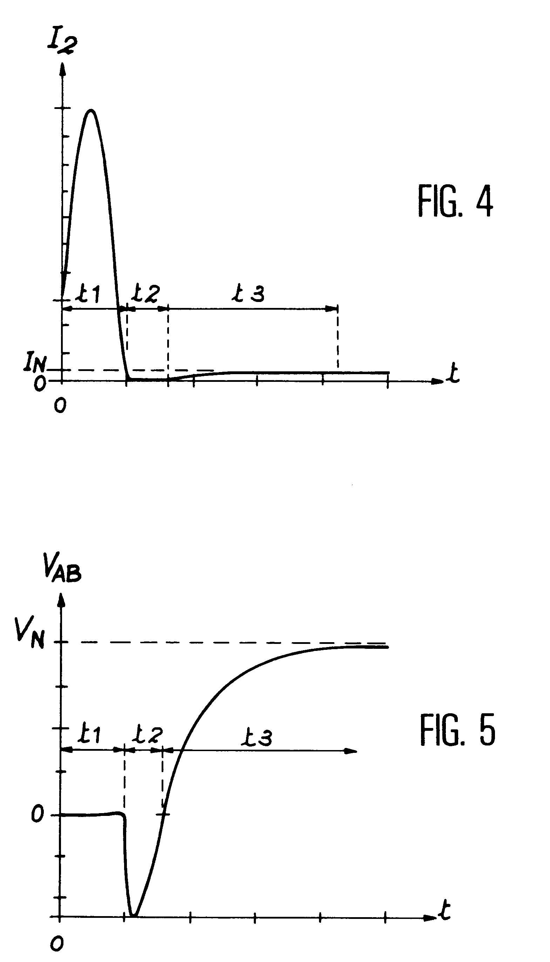

Comme le montre la figure 2, la capacité C, qui était chargée à une charge $Q_C$ égale environ au produit C.V en fonctionnement normal, se décharge dans l'arc électrique. La résistance R limite le courant dans le générateur V. Le courant $I_1$ dans la première branche reste constant, comme le montre la figure 3. Le courant $I_2$ parcourant la deuxième branche, c'est-à-dire, traversant la diode D et la charge K, et constituant l'arc électrique augmente pour atteindre un maximum de cet arc électrique (figure 4).

La tension entre les deux points de connexion A et B est constante, comme le montre la figure 5, en correspondance avec le courant $I_1$. L'inductance L introduit un retard dans le courant passant dans la troisième branche reliant A à B, de telle sorte qu'au bout du temps $t_1$, la tension dans les trois branches s'annule brusquement, alors que la charge de la capacité est déjà inversée et devient proche de la valeur-C.V. Il s'ensuit que la diode D interdit le passage du courant dans la charge K et met fin à l'arc électrique entre les deux électrodes $E_1$ et $E_2$. Le courant $I_2$ dans la charge K devient nul.

Durant la deuxième phase d'une durée $t_2$, la tension dans les branches devient négative. Ceci entraîne le blocage de la diode D et la disparition du courant dans la charge K, entre les électrodes $E_1$ et $E_2$. La capacité C chargée négativement se décharge dans la résistance R. A la fin de cette seconde phrase, la tension dans les branches redevient positive, alors que l'arc électrique a disparu dans la charge K. Le courant $I_1$ dans la résistance est passé par un pic, tandis que la charge dans la capacité C tend à redevenir positive.

La troisième phase de durée $t_3$ voit la reprise de la marche normale de l'installation électrique. Comme le montrent les figures 2, 3, 4 et 5, la tension dans les branches est positive et reprend sa valeur nominale $V_N$ ; le courant $I_1$ dans la résistance R, ainsi que le courant $I_2$ dans la charge K se stabilisent à la valeur de fonctionnement normal $I_N$ ; et la capacité C redevient positive.

Les différentes caractéristiques et les paramètres de fonctionnement du circuit de protection selon l'invention dépendent des valeurs relatives de la résistance R, de l'inductance L et de la capacité C. Les formules suivantes donnent les variations des différents paramètres correspondant à l'amplitude maximale possible.

Les durées $t_1$, $t_2$ et $t_3$ peuvent prendre les valeurs données par les formules suivantes :

$$\pi \sqrt{LC} < t_1 < \frac{3}{2} \pi \sqrt{LC} \quad \text{(I)}$$

$$t_2 \approx 0{,}7 \ R.\ C \quad \text{(II)}$$

$$t_3 \approx 3 \ R.\ C \quad \text{(III)}$$

L'expérience montre que, pour éviter d'endommager fortement les électrodes, la charge électrique Q passant dans l'arc électrique doit être limitée habituellement de 5 à 10 Coulomb. Sa valeur est définie par la formule suivante :

$$2 \ C.\ V. < Q < 5 \ C.\ V \quad \text{(IV)}$$

Le courant $I_1$ maximal dans le générateur V et la résistance R est :

$$I_1 \approx 1{,}5 \ V/R \quad \text{(V)}$$

L'énergie dissipée dans la résistance R durant les deux premières phases $t_1$ et $t_2$ est comprise entre les valeurs définies par la formule suivante :

$$1,5 \ C. \ V^2 < E < 4,8 \ C. \ V^2 \quad (VI)$$

Lorsque les conditions d'utilisation sont définies (ces conditions pouvant être : le temps de décharge tolérable, le temps d'interruption nécessaire et la charge admissible par les composants), les formules précédentes permettent de dimensionner le circuit de protection selon l'invention.

Les applications du circuit selon l'invention sont très nombreuses et concernent tous les systèmes utilisant des électrodes soumises à des hautes tensions, que ce soit sous vide ou dans un gaz. On peut citer les générateurs à haute fréquence, tels que les klystrons, les gyrotrons, les accélérateurs de particules, les installations de chauffage par induction électromagnétique et les canons à électrons.

Dans la deuxième branche, la place de la diode D par rapport à la charge K n'a pas d'importance. Il en est de même pour la résistance R par rapport au générateur V.

A titre d'illustration, on peut considérer un dispositif destiné à protéger un générateur de 10 KV subissant de fréquents claquages, et qui est composé d'une résistance R de 250 Ω, d'une capacité C de 27 μF et d'une inductance L de 24 mH. Avec un tel dispositif les claquages sont interrompus après une durée $t_1$ = 2,6 ms et la tension est rétablie après une durée $t_2$ = 4,7 ms. La charge passant dans le claquage est limitée à 0,6 C, et l'énergie dissipée dans la résistance, durant les deux phases $t_1$ et $t_2$, est de 5 KJ.

## Revendications

1. Dispositif de protection contre les claquages accidentels dans le circuit d'une installation électrique fonctionnant en courant continu, et comportant une charge (K) dont les électrodes ($E_1$ et $E_2$) sont portées à une haute tension, et un générateur électrique (V) pour alimenter la charge (K), caractérisé en ce qu'il comprend :

   - une première branche comportant le générateur (V) et une résistance (R) connectés en série ;
   - une deuxième branche comportant la charge (K) et un composant (D) placé en série avec la charge (K) et ne laissant passer le courant électrique que dans un sens, cette deuxième branche étant connectée en parallèle à la première branche par deux points de connexion (A et B) ; et
   - une troisième branche constituée d'une inductance (L) et d'une capacité (C) montées en série, et connectée aux deux points de connexion (A et B) ;
   le dispositif étant agencé de telle sorte que, en fonctionnement normal de l'installation électrique, la capacité (C) est chargée positivement et, lorsqu'un claquage accidentel amorce un arc entre les électrodes ($E_1$ et $E_2$) de la charge (K), la capacité (C), dans une première phase (t1), se décharge dans ledit arc électrique et se charge négativement jusqu'à ce que la tension entre lesdits points de connexion (A et B) devienne négative, ce qui met fin à l'arc électrique entre les électrodes ($E_1$ et $E_2$) de la charge (K), ensuite dans une deuxième phase (t2), la capacité (C) chargée négativement se décharge dans la résistance (R) de la première branche jusqu'à ce que la tension entre lesdits points de connexion (A et B) redevienne positive, et enfin dans une troisième phase (t3) le générateur (V) charge positivement la capacité (C) pour rétablir le fonctionnement normal de l'installation électrique.

2. Dispositif de protection selon la revendication 1, caractérisé en ce que la résistance (R) est la résistance interne du générateur électrique (V).

3. Circuit de protection selon la revendication 1 ou 2, caractérisé en ce que l'élément ne permettant le passage du courant que dans un sens est une diode (D).

## Patentansprüche

1. Schutzvorrichtung gegen zufällige Spannungsüberschläge im Stromkreis einer elektrischen Anlage, die mit Gleichstrom betrieben wird, umfassend eine Last (K), an deren Elektroden (E1 und E2) eine hohe Spannung liegt, und einen elektrischen Generator (V), um die Last (K) zu speisen,
   **dadurch gekennzeichnet,**
   daß sie umfaßt:

   - einen ersten Zweig, der, in Reihe geschaltet, den Generator (V) und einen Widerstand (R) enthält;
   - einen zweiten Zweig, der die Last (K) und ein Bauteil (D) enthält, das in Reihe geschaltet ist mit der Last (K) und den Strom nur in einer Richtung durchläßt, wobei dieser zweite Zweig durch zwei Anschlußpunkte (A und B) parallel an den ersten Zweig angeschlossen ist; und
   - einen dritten Zweig, gebildet durch eine Induktanz (L) und eine Kapazität (C), in Reihe geschaltet und angeschlossen an die beiden Anschlußpunkte (A und B);
   wobei die Vorrichtung so eingerichtet ist, daß bei Normalbetrieb der elektrischen Anlage die Kapazität (C) positiv geladen wird und, wenn ein zufälliger Überschlag einen Lichtbogen zündet zwischen den Elektroden (E1 und E2) der Last (K), die Kapazität (C) in einer ersten Phase (t1) sich entlädt in dem genannten Lichtbogen und sich negativ lädt, bis die Spannung zwischen den genannten Anschlußpunkten (A und B) negativ wird, was den Lichtbogen zwischen den Elektroden (E1 und E2) der Last (K) beendet, anschließend, in einer zweiten Phase (t2), die negativ geladene Kapazität (C) sich entlädt in den Widerstand (R) des ersten Zweigs, bis die Spannung zwischen den genannten Anschlußpunkten (A und B) wieder positiv wird, und schließlich in einer dritten Phase (t3) der Generator (V) die Kapazität (C) positiv lädt, um den Normalbetrieb der elektrischen Anlage wieder herzustellen.

2. Schutzvorrichtung nach Anspruch 1, dadurch gekennzeichnet, daß der Wiederstand (R) der Innenwiderstand des elektrischen Generators (V) ist.

3. Schutzschaltung nach Anspruch 1 oder 2, dadurch gekennzeichnet, daß das Element, das den Stromdurchgang nur in eine Richtung zuläßt, eine Diode (D) ist.

## Claims

1. Device for protecting against accidental breakdowns in the circuit of an electrical installation operating with direct current, and including a load (K), the electrodes ($E_1$ and $E_2$) of which are raised to a high voltage, and an electrical generator (V) for supplying the load (K), characterized in that it comprises:
   - a first branch including the generator (V) and a resistor (R) connected in series;
   - a second branch including the load (K) and a component (D) placed in series with the load (K) and allowing the electrical current to pass only in one direction, this second branch being connected in parallel to the first branch via two connection points (A and B); and
   - a third branch consisting of an inductor (L) and a capacitor (C) mounted in series, which branch is connected to the two connection points (A and B);
   the device being arranged in such a way that, under normal operation of the electrical installation, the capacitor (C) is charged positively and, when an accidental breakdown initiates an arc between the electrodes ($E_1$ and $E_2$) of the load (K), the capacitor (C), in a first phase (t1), is discharged into the said electric arc and is charged negatively until the voltage between the said connection points (A and B) becomes negative, thereby bringing to an end the electric arc between the electrodes ($E_1$ and $E_2$) of the load (K), then, in a second phase (t2), the negatively charged capacitor (C) is discharged into the resistor (R) of the first branch until the voltage between the said connection points (A and B) becomes positive again and, finally, in a third phase (t3), the generator (V) charges the capacitor (C) positively in order to re-establish the normal operation of the electrical installation.

2. Protective device according to Claim 1, characterized in that the resistor (R) is the internal resistance of the electrical generator (V).

3. Protective circuit according to Claim 1 or 2, characterized in that the element allowing the current to flow in only one direction is a diode (D).

FIG. 1

FIG. 2

FIG. 3

FIG. 4

FIG. 5